# EUROPÄISCHE PATENTSCHRIFT

(11) **EP 1 324 946 B1**
(45) Veröffentlichungstag und Bekanntmachung des Hinweises auf die Patenterteilung: **22.04.2009**
(21) Anmeldenummer: 01960707.6
(22) Anmeldetag: 24.08.2001
(51) Int. Cl.: C01B 31/34, C22C 29/08, C22B 34/36, C22B 34/34, C22B 5/00, B22F 9/20, C22C 1/04

(54) **ULTRAGROBES, EINKRISTALLINES WOLFRAMKARBID UND VERFAHREN ZU DESSEN HERSTELLUNG; UND DARAUS HERGESTELLTES HARTMETALL**
ULTRACOARSE, MONORYSTALLINE TUNGSTEN CARBIDE AND METHOD FOR PRODUCING THE SAME, AND HARD METAL PRODUCED THEREFROM
CARBURE DE TUNGSTENE ULTRAGROSSIER MONOCRISTALLIN, SON PROCEDE DE PRODUCTION, ET METAL DUR PRODUIT A PARTIR DE CE CARBURE DE TUNGSTENE

(30) Priorität: 06.09.2000 DE 10043792
(43) Veröffentlichungstag der Anmeldung: 09.07.2003
(73) Patentinhaber: H.C. Starck GmbH, 38642 Goslar (DE)
(72) Erfinder: BREDTHAUER, Jörg, 53123 Bonn (DE); GRIES, Benno, 38302 Wolfenbüttel (DE); SZESNY, Bernhard, 38685 Langelsheim (DE)
(74) Vertreter: Clauswitz, Kai-Uwe Wolfram
(86) Internationale Anmeldenummer: PCT/EP2001/009770
(87) Internationale Veröffentlichungsnummer: WO 2002/020403

(56) Entgegenhaltungen:
- US-A- 3 850 614
- US-A- 4 402 737
- US-A- 4 664 899
- US-A- 5 071 473
- US-A- 5 734 960
- PATENT ABSTRACTS OF JAPAN vol. 007, no. 244 (M-252), 28. Oktober 1983 (1983-10-28) & JP 58 130206 A (TOUKIYOU TUNGSTEN KK), 3. August 1983 (1983-08-03)
- PATENT ABSTRACTS OF JAPAN vol. 009, no. 066 (C-271), 26. März 1985 (1985-03-26) & JP 59 200750 A (KOMATSU SEISAKUSHO KK), 14. November 1984 (1984-11-14)

## Beschreibung

Hartmetalle sind als Verbundwerkstoff anzusehen, wobei die WC-Phase als Härteträger fungiert. Die mit der hohen Härte einhergehende Sprödigkeit des reinen WC wird durch die metallische Binderphase (im Allgemeinen Co, aber auch Fe und Ni sowie deren Legierungen und gegebenenfalls Cr) kompensiert. Bei hohen Bindergehalten ist die mechanische Verschleißfestigkeit nicht ausreichend, bei niedrigen Bindergehalten wird keine ausreichende mechanische Festigkeit erzielt. In der Praxis bestehen Hartmetalle daher aus 3 bis 30 Gew.-% Co, wobei 5 bis 12 % am häufigsten anzutreffen sind. Bei gegebenem Bindergehalt können Härte und Zähigkeit noch über den Dispersionsgrad der WC-Phase im gesinterten Hartmetall eingestellt werden (sogenannte Hall-Petch-Beziehung). Die Variationsbreite der dazu verwendeten Wolframkarbidpulver liegt bei 0,4 bis 50 µm FSSS (ASTM B 330). Die im gesinterten Hartmetall erzielbaren Härten liegen zwischen 1950 und 850 kg/mm² HV₃₀ (Vickers-Härte mit 30 kg Belastung) bei 10 Gew.-% Co.

Eine Aufgabe der Erfindung ist es, den zur Verfügung stehenden Härtebereich von Hartmetallen bei gleichem Bindergehalt nach unten zu erweitern. Der Hintergrund ist, dass das spezifische Verschleißverhalten von Hartmetall-Werkzeugen bei der schneidenden Gesteinsbearbeitung offenbar so ist, dass ein möglichst grobes und einkristallines Gefüge im gesinterten Hartmetall besonders lange Standzeiten und damit hohe Abtragsleistungen ohne vorzeitigen Werkzeugausfall ermöglicht. Solche Anwendungsfälle finden sich beim Tunnelvortrieb, Bohren von Sprenglöchern und beim Bergbau (EP 0 819 777 A1).

Die industriell etablierte Methode zur Herstellung von Wolframkarbid ist die Reduktion von WO₃, Wolframsäure oder Ammonium-Parawolframat unter Wasserstoff zunächst zum Metallpulver mit anschließender Karburierung. Das so erhaltene Wolframmetallpulver fällt dabei in Korngrößen zwischen 0,3 und 50 µm an, wobei die Korngröße durch die Besatzmenge oder Schütthöhe, Feuchte des Wasserstoffs, Reduktionstemperatur und Verweilzeit in gewissen Grenzen eingestellt werden kann. Bei der folgenden Karburierung des so erhaltenen Wolframmetallpulvers mit festem Kohlenstoff bei Temperaturen bis 2 200°C bleibt diese Korngröße nach Aufarbeitung im Wesentlichen erhalten. Zur Erzielung von mittleren Korngrößen über etwa 12 µm FSSS reicht die realisierbare Spannweite der obigen Produktionsparameter bei der Reduktion nicht mehr aus.

US 4,402,737 beschreibt das Dopen von Wolframoxid mit Alkalichloriden, insbesondere mit LiCl, womit sich die höchsten FSSS-Werte im Wolframmetallpulver erzielen lassen. Das Entwicklungsziel sind jedoch polykristalline Pulver (Spalte 1, Zeile 22). Derartige Wolframmetallpulver führen nach der Karburierung zu agglomerierten Verbunden von feinen WC-Kristallen, was dann wiederum zu einem höheren Dispersionsgrad der WC-Phase im gesinterten Hartmetall und damit zu einer vergleichsweise hohen Härte führt. Nachteilig ist ferner, dass das bei der Wasserstoffreduktion entstehende, gasförmige HCl zu einer vermehrten Korrosion in den Anlagen führt, die zur Abtrennung des Wasserstoffs vom entstehenden Wasser verwendet werden.

Gemäß EP 0 819 777 A1 wird zur Herstellung von groben, einkristallinen WC-Pulvern die fraktionierte Sichtung von WC-Pulvem mit breiter Kornverteilung vorgeschlagen, z.B. mittels Mahlen und anschließender Windsichtung. Diese Trennung ist mit ausreichender Genauigkeit zwar möglich und führt auch zu entsprechend guten Hartmetallen mit geringen Härten, bedeutet jedoch einen erhöhten Fertigungsaufwand und die Erzeugung von Kuppelprodukten. Mit diesem Verfahren (und einer nicht-konventionellen Vermischung von WC- und Kobaltmetallpulver über ein auf wendiges Pyrolyse-Verfahren statt der konventionellen Mischmahlung) sollen sich Hartmetalle herstellen lassen, die bei 6 % Co eine Vickers-Härte von 980 kg/mm² haben (EP 0 819 777 A1) und entsprechend gute Eigenschaften haben.

Aufgabe der Erfindung ist es, ein Herstellverfahren mit hoher Ausbeute für einkristallines WC mit einer mittleren Korngröße größer 50 µm FSSS und ausreichender Reinheit anzugeben, wobei die entsprechend konventionell (d.h. mittels mahlender Vermischung von Kobaltmetallpulver mit dem Wolframkarbid) hergestellten Hartmetalle mit enger Größenverteilung des WC eine Härte von höchstens 850 HV₃₀ mit 10 Gew.-% Co bzw. 980 HV₃₀ bei 6 % Co aufweisen sollen. Hierzu ist es erforderlich, zunächst grobkristallines Wolframmetallpulver herzustellen.

Die Erfindung geht von der Vorstellung aus, dass das Kristallwachstum im Falle des Materialtransportes durch Flüssigphasendiffusion gegenüber Festphasen- und Gasphasendiffusion begünstigt ist. Dies liegt daran, dass für den Materialtransport über Festphasen- und Gasphasendiffusion höhere Übersättigungen erforderlich sind als beim Transport über die Flüssigphase. Höhere Übersättigungen führen aber zu erhöhter Keimbildung, so dass im Mittel kleinere Kristalle entstehen.

Die bekannte Reduktion von Wolframoxid unter Einsatz von Lithium als Dotierungsmittel scheint nach folgender Reaktionsgleichung zu verlaufen:

(Li₂O)₁₋ₓWO_{Z} + 3 x H₂ → (1-x) Li₂WO_{Z} + xW + 3 x H₂O (I);

Im Falle der Verwendung von WO₃ liegt der Wert von Z zwischen 3 und 4. Der Schmelzpunkt von Lithium-Wolframat liegt bei etwa 740°C. Während des Reduk-tionsvorgangs kann aber offenbar aufgrund der Schmelzpunkterhöhung durch das im Lithium-Wolframat gelöste Wolframoxid (nicht stöchiometrische Lithium-Wolframate) eine den Materialtransport kontrollierende Schmelze nicht oder nur unzureichend ausgebildet werden.

Die vorliegende Erfindung geht von der Vorstellung aus, dass das Kristallwachstum bei der Reduktion von Wolframoxid im Sinne der Ausbildung größerer Kristalle dann günstig beeinflusst werden kann, wenn intermediäre Phasen mit hinreichend niedrigem Schmelzpunkt zur Verfügung gestellt werden.

Es wurde gefunden, dass dies gelingt, wenn während der Reduktion Mischalkali-Verbindungen eingesetzt werden.

Gegenstand der vorliegenden Erfindung ist demgemäß ein Verfahren zur Herstellung von Wolfram-Metallpulver oder -Karbid durch reduzierende und gegebenenfalls karburierende Behandlung von Wolfram-Pulver in Gegenwart von Alkalimetallverbindungen, das dadurch gekennzeichnet ist, dass zumindest zwei Alkalimetallverbindungen in einem solchen Verhältnis eingesetzt wenden, dass intermediär gebildetes Mischalkali-Wolframat bzw. Molybdat ((Li, Na, K)₂ WO_{Z}), (Li, K, Na)₂MoO_{Z}) einen Schmelzpunkt von weniger als 550°C aufweist.

Vorzugsweise werden die Mischalkali-Verbindungen in Mengen von insgesamt 0,2 bis 1,5 mol-%, bezogen auf das Wolframoxid, eingesetzt.

Vorzugsweise wird eine Mischalkali-Verbindung aus einer Natrium- und einer Lithium-Verbindung mit einem molaren Verhältnis von Natrium zu Lithium von 0,9 bis 1,26 eingesetzt. Insbesondere bevorzugt wird eine Mischalkali-Verbindung, enthaltend Natrium-, Lithium- und Kalium-Verbindung, eingesetzt, wobei die Kalium-Verbindung das Natrium und/oder Lithium in dem oben genannten molaren Verhältnis bis zu einem Gcsamtkalium-Gehalt von 40 mol-%, weiter bevorzugt 10 bis 30 mol-%, ersetzt.

Die optimale Mischalkali-Verbindungs-Zusammensetzung sollte im Bereich des Eutektikums des Dreistoffgemisches der Lithium-, Natrium- und Kalium-ortho-Wolframate bei einer Zusammensetzung von ca. 46,4 mol-% Lithiumkomponente, 36,3 mol-% Natriumkampanente und 17,4 mol-% Kaliumkomponente mit einem Schmelzpunkt von 424°C liegen (siehe L. Smith Ed., "Phase Diagrams for Ceramists", Vol. IV., The American Ceramic Soc. (1981), Figur 5444).

Die Mischalkali-Verbindungen können als Alkalioxide, -karbonate, -wolframate, -hydroxide oder -halogenide eingesetzt werden. Unter dem Gesichtspunkt des korrosiven Verhaltens der Chloride, des hohen Schmelzpunktes der Oxide und des ungünstigen Verdampfungsverhaltens der Hydroxide sind Karbonate und Wolframate bevorzugt, wobei insbesondere wegen der leichteren Verfügbarkeit Carbonate bevorzugt sind.

Die Alkali-Verbindungen können als Mischungen von Alkali-Verbindungen oder vorlegierte (z. B. durch Ko-Präzipitation erhaltene) Mischalkali-Verbindungen eingesetzt werden.

Für das erfindungsgemäße Verfahren ist es nicht wesentlich, dass sich tatsächlich eine intermediäre Phase mit einem Schmelzpunkt von weniger als 520°C ausbildet. Wesentlich ist das Verhältnis von Natriumkomponente und Lithiumkomponente, gegebenenfalls substituiert durch eine Kaliumkomponente. Während der Reduktion auftretende flüssige Phasen dürften aufgrund eines stöchiometrischen Defizits an Alkali- in dem gebildeten Mischalkali-Wolframat einen höheren, jedoch noch hinreichend niedrigen Schmelzpunkt aufweisen.

Zur Durchführung des erfindungsgemäßen Verfahrens wird Wolframoxid, vorzugsweise gelbes WO₃, mit der Mischalkaliverbindung bzw. der Alkaliverbindungsmischung vorzugsweise trocken vermischt, unter einem reduzierenden Gas auf Reduktionstemperatur von ca. 950 bis 1 200°C aufgeheizt, wobei sich im Temperaturbereich von etwa 600 bis 850°C die Mischalkali-Wolframate bilden. Anschließend wird die Temperatur bei strömendem Reduktionsgas bis zur vollständigen Reduktion zum Metall. über 5 bis 20 Stunden gehalten und das Metallpulver abgekühlt. Als reduzierendes Gas geeignet sind wasserstoff- und/oder kohlenmonoxid- und/oder kohlenwasserstoffhaltige Atmosphären geeignet.

Das erhaltene Wolframmetallpulver, gegebenenfalls nach desagglomerierender Mahlung, mit mittleren Teilchengrößen von >20 µm, vorzugsweise >40 µm, insbesondere bevorzugt zwischen 50 und 70 µm, kann als solches vorteilhaft zur pulvermetallogischen Herstellung von Sinterformteilen eingesetzt werden.

Vorzugsweise wird das Wolframmetallpulver innig mit Kohlenstoff, insbesondere Ruß, vermischt und in an sich bekannter Weise karburiert.

Obwohl zur Reduktion von Molybdänoxid (Schmelzpunkt MoO₃ 795°C) noch keine experimentellen Erfahrungen vorliegen, wird erwartet, dass aufgrund der Ähnlichkeit des Dreistoffdiagramms von Lithiummolybdat, Natriummolybdat und Kaliummolybdat das Kristallisationsverhalten bei der Reduktion zum Molybdänmetall sowie die Reduktionstemperatur günstig beeinflusst werden können.

### Beispiele

### Beispiel 1 (erfindungsgemäßes Beispiel)

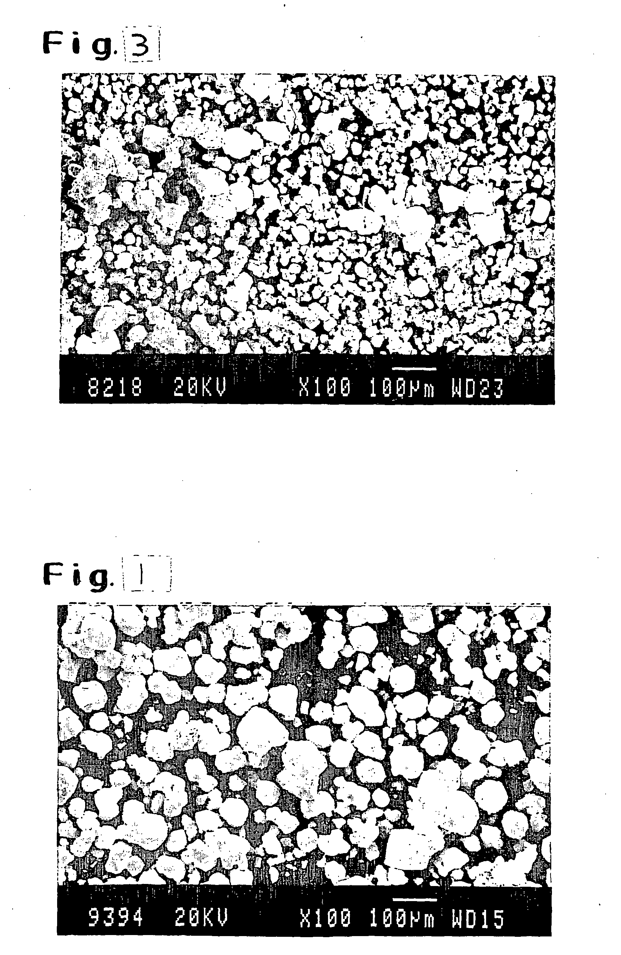

Grobes, einkristallines Wolframkarbid wurde wie folgt hergestellt: 50 kg gelbes WO₃ (H.C. Starck, Hartmetallqualität) wurden mit 0,12 kg eines Mischkarbonates (hergestellt durch Aufschmelzen eines Gemischs von 0,032 kg Kaliumkarbonat, 0,046 kg Lithiumkarbonat und 0,042 kg Natriumcarbonat, anschließendes Abschrecken und Pulverisieren) durch Mischen in einem Zwangsmischer vermischt. Das so hergestellte, mit insgesamt 0,58 mol-% Alkalimetalllcarbonaten gedopte Wolframoxid wurde bei 1 150°C unter Wasserstoff mit einer Verweilzeit von 10 h zum Wolframmetallpulver reduziert. Die mittlere Korngröße des so hergestellten Wolframmetallpulvers betrug >50 µm nach ASTM B 330. Das Wolframmetallpulver wurde in einem Zwangsmischer mit Ruß vermischt und bei 2 250°C karburiert. Es wurde anschließend mittels Backenbrecher gebrochen und über 400 µm gesiebt. Der Siebrückstand wurde wieder über den Backenbrecher aufgearbeitet. Der FSSS wurde zu 67 µm bestimmt, wobei die doppelte Einwaage bei der Bestimmung verwendet wurde, und der erhaltene Messwert mit einem Korrekturfaktor, der von der Porosität abhängt und gemäß ASTM B330 berechnet wird, multipliziert wurde. Laut REM-Bild ist das WC vergleichsweise grob, weist erheblich reduzierten Feinanteil auf und hat größere Einkristalle bis maximal 100 µm (Figur 1).

Nach 15 h Nassmahlung in Hexan mit 6 Gew.-% Kobaltmetallpulver (H. C. Starck, "Co MP II") mittels Kugelmühle (Material: Kugeln = 1 : 2 Gewichtsteile) ergab sich nach einer Vakuumsinterung bei 1 420°C eine Härte von 974 kg/mm³ (HV₃₀)- Verlängerung der Mahldauer auf 20 h führte zu einem Härteanstieg auf 1 034 kg/mm². Die Porosität lag bei A02B02 bzw. A02B00 nach ISO 4505.

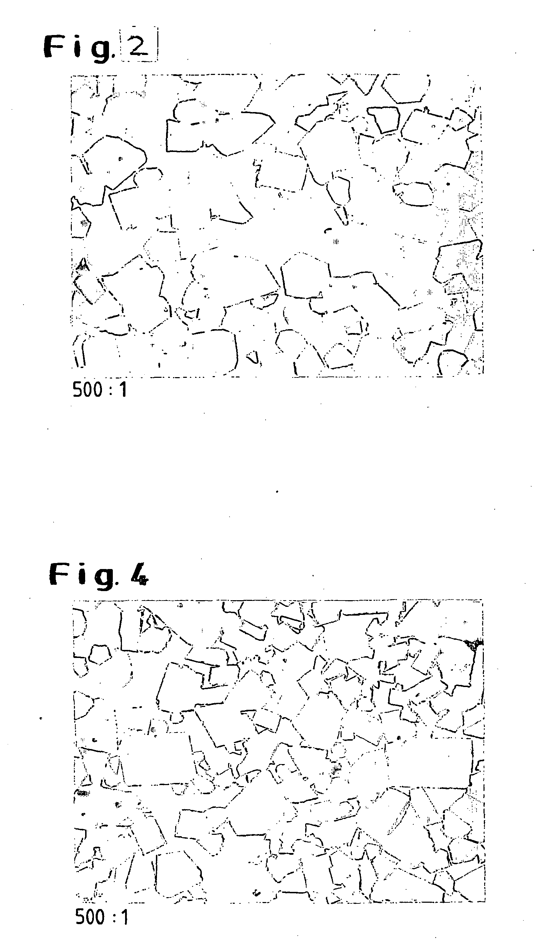

Nach 10 h Nassmahlung in Hexan mit 9,5 Gew.-% Kobalt (sonstige Bedingungen wie oben), ergab sich nach Vakuumsinterung bei 1420°C eine Härte von 830 kg/mm². Die Restporosität lag bei A02B00 nach ISO 4505. Das Hartmetall weist ein sehr grobes, aber gleichmäßiges Gefüge auf (Figur 2).

### Beispiel 2 (erfindungsgemäßes Beispiel)

Das WC-Pulver wurde wie unter Beispiel 1 beschrieben hergestellt, nur dass eine Mischung von Einzel-Alkalikarbonaten verwendet wurde. Der FSSS des so hergestellten Wolframkarbides betrug 53 µm (Bestimmung wie im Beispiel 1).

### Beispiel 3 (Vergleichsbeispiel)

WO₃ wurde mit 0,1 Gew.-% Lithiumkarbonat (entsprechend 0,32 mol-% Alkalikarbonat) in einem Zwangsmischer homogenisiert und für 10 h bei 1 150°C unter Wasserstoff reduziert. Der FSSS betrug 40 µm. Nach Vermischen mit Ruß wurde bei 2 250°C karburiert. Das Wolframkarbid wurde mittels Backenbrecher aufgearbeitet und über 400 µm gesiebt. Der FSSS des Wolframkarbides wurde zu 50 µm bestimmt. Laut REM-Bild ist das WC von breiter Kornverteilung, zeigt einen erhöhten Feinanteil und Einkristalle bis 50 µm (Figur 3).

Der Hartmetalltest mit 9,5 % Kobalt (durchgeführt wie unter Beispiel 1) ergab eine Rockwell-Härte von 84.3 HRA bzw, eine Vickers-Härte von 897 kg/mm². Das Hartmetallgefüge ist grob, aber unregelmäßig mit vergleichsweise hohem Feinanteil (Figur 4):

## Patentansprüche

1. Verfahren zur Herstellung von Wolfram- und/oder Molybdän-Metallpulver oder -Carbid durch reduzierende und gegebenenfalls karburierende Behandlung von Wolfram- und/oder Molybdänoxidpulver in Gegenwart von Alkalimetallverbindungen, **dadurch gekennzeichnet, dass** zumindest zwei Alkalimetallverbindungen in solchem Verhältnis eingesetzt werden, dass potentiell intermediär gebildetes Mischalkali-Wolframat bzw. -Molybdat ((Li, Na, K)₂WO_{Z}, (Li, Na, K)₂MoO_{Z}) einen Schmelzpunkt von weniger als 550°C aufweist.

2. Verfahren nach Anspruch 1, **dadurch gekennzeichnet, dass** die Alkaliverbindungen in Mengen von insgesamt 0,2 bis 1,5 mol-%, bezogen auf das Wolfram- und/oder Molybdänoxid eingesetzt wird.

3. Verfahren nach Anspruch 1 oder 2, wobei die Alkaliverbindungen ein molares Verhältnis von Na zu Li von 0,9 bis 1,26 aufweisen, wobei bei weiterer Gegenwart einer Kaliumverbindung diese Na und/oder Li bis zu 40 mol-% ersetzt.

4. Verfahren nach einem der Ansprüche 1 bis 3, wobei die Alkaliverbindungen als Mischsalz eingesetzt werden.

5. Verfahren nach einem der Ansprüche 1 bis 4, wobei als Alkaliverbindungen Oxide, Hydroxide, Carbonate, und/oder Wolframate bzw. Molybdate eingesetzt werden.

6. Verfahren nach einem der Ansprüche 1 bis 5, wobei als Wolframoxidpulver WO₃ bzw. als Molybdänoxidpulver MoO₃ eingesetzt wird.

7. Verfahren nach einem der Ansprüche 1 bis 5, wobei als Wolframoxidpulver WO₂ bzw. als Molybdänoxidpulver MoO₂ eingesetzt werden.

8. Verfahren nach einem der Ansprüche 1 bis 7, wobei die reduzierende Behandlung in Wasserstoff- und/oder Kohlenmonoxid- und/oder Kohlenwasserstoff-haltiger Atmosphäre durchgeführt wird.

9. Wolframmetallpulver, hergestellt nach einem der Ansprüche 1 bis 8.

10. Molybdänmetallpulver, hergestellt nach einem der Ansprüche 1 bis 8.

11. Wolframcarbidpulver, hergestellt nach einem der Ansprüche 1 bis 8.

12. Verwendung des Wolframcarbidpulvers nach Anspruch 11 zur Herstellung von gesinterten Hartmetallen oder infiltrierten Werkzeugen.

## Claims

1. Process for producing tungsten and/or molybdenum metal powder or carbide by reducing and if appropriate carburizing treatment of tungsten and/or molybdenum oxide powder in the presence of alkali metal compounds, **characterized in that** at least two alkali metal compounds are used in a ratio which is such that any intermediate mixed alkali metal tungstate or molybdate ((Li, Na, K)₂WO_{z}, (Li, Na, K)₂MoO_{z}) that may be formed has a melting point of less than 550°C.

2. Process according to Claim 1, **characterized in that** the alkali metal compounds are used in quantities of in total 0.2 to 1.5 mol%, based on the tungsten and/or molybdenum oxide.

3. Process according to Claim 1 or 2, wherein the alkali metal compounds have a molar ratio of Na to Li of from 0.9 to 1.26, wherein if a potassium compound is also present said compound replaces Na and/or Li to an extent of up to 40 mol%.

4. Process according to one of Claims 1 to 3, wherein the alkali metal compounds are used in mixed salt form.

5. Process according to one of Claims 1 to 4, wherein the alkali metal compounds used are oxides, hydroxides, carbonates, and/or tungstates or molybdates.

6. Process according to one of Claims 1 to 5, wherein the tungsten oxide powder used is WO₃ and/or the molybdenum oxide powder used is MoO₃.

7. Process according to one of Claims 1 to 5, wherein the tungsten oxide powder used is WO₂ and/or the molybdenum oxide powder used is MoO₂.

8. Process according to one of Claims 1 to 7, wherein the reducing treatment is carried out in an atmosphere that contains hydrogen and/or carbon monoxide and/or hydrocarbon.

9. Tungsten metal powder, produced in accordance with one of Claims 1 to 8.

10. Molybdenum metal powder, produced in accordance with one of Claims 1 to 8.

11. Tungsten carbide powder, produced in accordance with one of Claims 1 to 8.

12. Use of the tungsten carbide powder according to Claim 11 for producing sintered carbides or infiltrated tools.

## Revendications

1. Procédé de production d'une poudre métallique ou de carbure de tungstène et/ou de molybdène par traitement réducteur et éventuellement carburant d'une poudre d'oxyde de tungstène et/ou de molybdène en présence de composés de métaux alcalins, **caractérisé en ce qu'**au moins deux composés de métaux alcalins sont utilisés en un rapport tel que le tungstate ou le molybdate alcalin mixte potentiellement formé de façon intermédiaire ((Li, Na, K)₂NO_{z}, (Li, Na, K)₂MoO_{z}) présente un point de fusion inférieur à 550°C.

2. Procédé selon la revendication 1, **caractérisé en ce que** les composés alcalins sont utilisés en des quantités de 0,2 à 1,5 % en moles au total, par rapport à l'oxyde de tungstène et/ou de molybdène.

3. Procédé selon la revendication 1 ou 2, dans lequel les composés alcalins présentent un rapport molaire entre le Na et le Li de 0,9 à 1,26, où en la présence supplémentaire d'un composé du potassium, ce Na et/ou Li remplace jusqu'à 40 % en moles.

4. Procédé selon l'une quelconque des revendications 1 à 3, dans lequel les composés alcalins sont utilisés sous la forme d'un sel mixte.

5. Procédé selon l'une quelconque des revendications 1 à 4, dans lequel on utilise, en tant que composés alcalins, des oxydes, des hydroxydes, des carbonates et/ou des tungstates ou molybdates.

6. Procédé selon l'une quelconque des revendications 1 à 5, dans lequel on utilise du WO₃ en tant que poudre d'oxyde de tungstène ou du MoO₃ en tant que poudre d'oxyde de molybdène.

7. Procédé selon l'une quelconque des revendications 1 à 5, dans lequel on utilise du WO₂ en tant que poudre d'oxyde de tungstène ou du MoO₂ en tant que poudre d'oxyde de molybdène.

8. Procédé selon l'une quelconque des revendications 1 à 7, dans lequel le traitement réducteur est réalisé dans une atmosphère contenant de l'hydrogène et/ou du monoxyde de carbone et/ou de l'hydrocarbure.

9. Poudre métallique de tungstène, produite selon l'une quelconque des revendications 1 à 8.

10. Poudre métallique de molybdène, produite selon l'une quelconque des revendications 1 à 8.

11. Poudre de carbure de tungstène, produite selon l'une quelconque des revendications 1 à 8.

12. Utilisation de la poudre de carbure de tungstène selon la revendication 11 pour la production de métaux durs frittés ou d'outils infiltrés.
